# EUROPÄISCHE PATENTANMELDUNG

(11) **EP 4 651 347 A1**
(43) Veröffentlichungstag der Anmeldung: **19.11.2025**
(21) Anmeldenummer: 25174957.8
(22) Anmeldetag: 08.05.2025
(51) Int. Cl.: H02K 3/50, H02K 15/36, H02K 15/0421

(54) **HERSTELLUNGSVERFAHREN EINES STATORS, EINE ELEKTROMASCHINE UND KRAFTFAHRZEUG MIT DERARTIGEM STATOR**

(30) Priorität: 17.05.2024 DE 102024204642
(71) Anmelder: VOLKSWAGEN AG, 38440 Wolfsburg (DE)
(72) Erfinder: Pieper, Sven, 38440 Wolfsburg (DE); Bachmann, Tim, 38440 Wolfsburg (DE)

(57) **Zusammenfassung**

Herstellungsverfahren eines Stators (1) für eine Elektromaschine , die zum Antreiben eines Kraftfahrzeugs geeignet ist, aufweisend:

- Bereitstellen eines Statorgrundkörpers (4) mit einer Vielzahl von Statornuten (5),

- Anordnen von Hairpins (6) in den Statornuten (5), wobei eine Hairpinendseite jedes der Hairpins (6) eine konkave Endkontur (10) aufweist, welche sich zur Endfläche jedes aus einer Statornut (5) herausragenden Hairpinendes (7) hin erstreckt, und

- Twisten der Hairpinenden (7) in eine Umfangsrichtung (U) des Statorgrundkörpers (4) durch Eingreifen eines Twistwerkzeugs in die konkaven Endkonturen (10) und Ausüben einer Twistkraft auf die Hairpinenden (7) durch das Twistwerkzeug in Umfangsrichtung (U).

Sowie eine Elektromaschine, das einen derartigen Stator aufweist, zum Antreiben eines Kraftfahrzeugs. Ein Kraftfahrzeug mit einem elektrischen Antriebssystem, das eine Elektromaschine mit derartigem Stator aufweist.

## Beschreibung

Die vorliegende Erfindung betrifft ein Verfahren zur Herstellung eines Stators für eine Elektromaschine zum Antreiben eines Kraftfahrzeugs. Ferner betrifft die Erfindung eine Elektromaschine zum Antreiben eines Kraftfahrzeugs sowie ein Kraftfahrzeug mit einem elektrischen Antriebssystem.

Es ist eine Vielzahl unterschiedlicher Statoren für Elektromaschinen zum Antreiben von Kraftfahrzeugen bekannt. Aus Effizienzgründen weisen Statoren elektrischer Traktionsgetriebe häufig Statorwicklungen auf, die als Steckwicklung ausgebildet sind. Derartige Statoren werden auch als *"Hairpin-Statoren"* bezeichnet, da die zur Erzeugung der Steckwicklung verwendeten Statordrähte der Form einer Haarnadel ähneln.

Statordrähte für Hairpin-Statoren werden im Wesentlichen in zwei unterschiedlichen Arten unterteilt, in U-Pins und in I-Pins. U-Pins weisen zwei parallel angeordnete Schenkel auf, die in einem umgebogenen Zwischenbereich miteinander verbunden sind. An einer vom Zwischenbereich abgewandten Seite weisen die Schenkel jeweils ein freies Ende auf. I-Pins sind stabförmig ausgebildet und entsprechen etwa einem Schenkel eines U-Pins. Die freien Enden der U-Pins und I-Pins weisen jeweils eine Hairpinendfläche auf.

Beim Herstellen eines Hairpin-Stators wird zunächst ein Statorgrundkörper mit Statornuten bereitgestellt. In einem nächsten Schritt werden die Hairpins in die Statornuten derart gesteckt, dass die Hairpins beidseitig aus dem Statorgrundkörper herausragen. Die freien Hairpinenden der Hairpins werden anschließend mit einem Werkzeug geweitet und getwistet. Da Endabschnitte der freien Hairpinenden bei diesem Vorgang vom Werkzeug gegriffen werden, stehen diese weiterhin in axialer Richtung vom Statorgrundkörper ab. Schließlich werden die Endabschnitte jeweils paarweise miteinander verschweißt. Auf diese Weise ist eine mehrphasige Statorwicklung hergestellt. Ein solches Verfahren ist beispielsweise aus dem Dokument US 2006 / 0 267 440 A1 bekannt. Eine Vorrichtung zur Durchführung eines derartigen Verfahrens zeigt das Dokument DE 10 2019 130 534 A1. Nachteilig bei solchen Statoren ist, dass die abstehenden Endabschnitte der freien Hairpinenden verhältnismäßig viel Platz in Anspruch nehmen.

Ein alternatives Herstellungsverfahren für Statoren ist aus dem Dokument WO 2023 / 233 618 A1 bekannt. Die Endabschnitte der freien Hairpinenden sind wesentlich kürzer ausgebildet. Zudem wird nur ein Hairpinende eines miteinander zu verschweißenden Hairpinpaars getwistet, während das andere Hairpinende in axialer Richtung vom Statorgrundkörper absteht. Auf diese Weise ist eine zusätzliche radiale Führung beim Twisten bereitgestellt, sodass weniger Platz für das Werkzeug zum Twisten erforderlich ist. Das Dokument US 11 710 999 B2 offenbart ebenfalls ein Verfahren bei welchem sämtliche freie Hairpinenden getwistet werden. Nach dem Twisten werden abstehende Endbereiche der Hairpinenden abgeschnitten. Zum paarweise Zusammenschweißen benachbarter Hairpinenden ist ein Haltewerkzeug vorgesehen. Nachteilig ist, dass durch das Ablängen der Endbereiche ein verhältnismäßig hoher Materialausschuss vorliegt.

Es ist daher Aufgabe der vorliegenden Erfindung, die voranstehend beschriebenen Nachteile bei einem Stator für eine Elektromaschine zum Antreiben eines Kraftfahrzeugs zu beheben oder zumindest teilweise zu beheben. Insbesondere ist es Aufgabe der vorliegenden Erfindung, ein Verfahren zur Herstellung eines Stators für eine Elektromaschine zum Antreiben eines Kraftfahrzeugs, eine Elektromaschine zum Antreiben eines Kraftfahrzeugs sowie ein Kraftfahrzeug mit einem elektrischen Antriebssystem zu schaffen, die auf eine einfache und kostengünstige Art und Weise eine besonders kompakte Baugröße aufweisend und/oder einen übermäßigen Materialausschuss vermeiden.

Die voranstehende Aufgabe wird durch die Patentansprüche gelöst. Demnach wird die Aufgabe durch ein Verfahren zur Herstellung eines Stators für eine Elektromaschine zum Antreiben eines Kraftfahrzeugs mit den Merkmalen des unabhängigen Anspruchs 1, eine Elektromaschine zum Antreiben eines Kraftfahrzeugs mit den Merkmalen des nebengeordneten Anspruchs 9 sowie durch ein Kraftfahrzeug mit einem elektrischen Antriebssystem mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Elektromaschine sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch ein Verfahren zur Herstellung eines Stators für eine Elektromaschine zum Antreiben eines Kraftfahrzeugs gelöst. Das Verfahren weist auf:
- Bereitstellen eines Statorgrundkörpers mit einer Vielzahl von Statornuten,
- Anordnen von Hairpins in den Statornuten, derart, dass die Hairpins in radialer Richtung des Statorgrundkörpers in mehreren Hairpinlagen in den Statornuten angeordnet sind und Hairpinenden der Hairpins in axialer Richtung des Statorgrundkörpers aus dem Statorgrundkörper herausragen, wobei die Hairpinenden jeweils eine die Hairpins in Längsrichtung der Hairpins begrenzende Hairpinendfläche aufweisen, wobei eine Hairpinendseite der Hairpins eine konkave Endkontur aufweist, welche sich zur Hairpinendfläche hin erstreckt, und
- Twisten der Hairpinenden in eine Umfangsrichtung des Statorgrundkörpers durch Eingreifen eines Twistwerkzeugs in die konkaven Endkonturen und Ausüben einer Twistkraft auf die Hairpinenden durch das Twistwerkzeug in Umfangsrichtung.

Zunächst wird der Statorgrundkörper bereitgestellt. Der Statorgrundkörper ist vorzugsweise aus einer Vielzahl von Blechscheiben hergestellt, die koaxial gestapelt und miteinander verbunden sind. Die Blechscheiben sind vorzugsweise aus Elektroblech gebildet und weisen weiter bevorzugt jeweils eine Beschichtung, insbesondere eine elektrisch isolierende Beschichtung, wie beispielsweise Backlack oder dergleichen, auf. Der Statorgrundkörper erstreckt sich entlang einer Statorlängsachse.

In dem Statorgrundkörper sind mehrere Statornuten zur Aufnahme der Hairpins angeordnet. Die Statornuten erstrecken sich vorzugsweise parallel zur Statorlängsachse und weisen in radialer Richtung eine Nuttiefe auf. Die Nuttiefe entspricht vorzugsweise einem Vielfachen einer Hairpindicke der Hairpins, wobei unter der Hairpindicke eine Dicke eines Drahts, aus welchem die Hairpins geformt sind, zu verstehen ist. Somit sind mehrere Hairpinlagen in einer Statornut in radialer Richtung übereinander anordenbar.

Eine Nutbreite der Statornuten entspricht vorzugsweise einer Hairpinbreite der Hairpins, wobei unter der Hairpinbreite eine Breite des Drahts, aus welchem die Hairpins geformt sind, zu verstehen ist. Im montierten Zustand ist die Hairpinbreite in Umfangsrichtung bzw. Tangentialrichtung ausgerichtet. Vorzugsweise ist in den Statornuten jeweils ein Nutisolationsmaterial zur elektrischen Isolierung der Statornut gegenüber den Hairpins angeordnet. Das Nutisolationsmaterial kann beispielsweise als Isolationspapier ausgebildet sein.

Die Hairpins werden in mehreren Hairpinlagen in den Statornuten angeordnet. Somit sind in den Statornuten jeweils mehrere Hairpins in radialer Richtung nebeneinander angeordnet. Das Anordnen der Hairpins erfolgt zudem derart, dass die Hairpinenden der Hairpins in axialer Richtung des Statorgrundkörpers aus dem Statorgrundkörper herausragen. Bei I-Pins ragen demnach die freien Hairpinenden der Hairpins beidseitig aus dem Statorgrundkörper. Bei U-Pins ragen die freien Hairpinenden auf einer Seite aus dem Statorgrundkörper. Aus der anderen Seite des Statorgrundkörpers ragen die umgebogenen Zwischenbereiche der Hairpins.

Für die Durchführung des erfindungsgemäßen Verfahrens werden Hairpins verwendet, bei welchen die Hairpinenden jeweils eine die Hairpins in Längsrichtung der Hairpins begrenzende Hairpinendfläche aufweisen. Überdies weist eine Hairpinendseite der Hairpins eine konkave Endkontur auf, welche sich zur Hairpinendfläche hin erstreckt. Durch die konkave Endkontur ist ein Eingreifen des Twistwerkzeugs in den Hairpinendbereich gewährleistet, bei welchem ein seitliches Abrutschen des Twistwerkzeugs vom Hairpin beim Twisten formschlüssig verhindert ist. Die konkave Endkontur kann daher auch als Führungsgeometrie bezeichnet werden. Vorzugsweise erstreckt sich die konkave Endkontur bis zur Hairpinendfläche.

Die Hairpins sind vorzugsweise aus Kupfer oder dergleichen hergestellt. Vorzugsweise weisen die Hairpins eine elektrisch isolierende Beschichtung, beispielsweise aus Drahtlack oder dergleichen, auf. Die miteinander elektrisch zu koppelnden sowie zu verbindenden Endbereiche der Hairpinenden, beispielsweise durch Schweißen, Löten, Crimpen oder dergleichen, sind vorzugsweise abisoliert bzw. weisen zumindest keine elektrisch isolierende Beschichtung auf, um eine elektrische Kontaktierung der Hairpins zu gewährleisten. Die konkave Endkontur ist daher vorzugsweise frei von der elektrisch isolierenden Beschichtung.

Vorzugsweise erfolgt ein zusätzliches Weiten der auf einer Grundkörperseite des Statorgrundkörpers aus dem Statorgrundkörper herausragenden Hairpinenden in die radiale Richtung durch ein hierfür ausgebildetes Werkzeug. Durch das Weiten ist eine höhere Prozesssicherheit beim Twisten und elektrischen Koppeln sowie mechanischen Verbinden, wie beispielsweise Schweißen, Löten, Crimpen oder dergleichen, gewährleistet. Das Twisten kann somit besonders reibungsarm erfolgen, ohne dass benachbarte Hairpinenden aneinander abgleiten. Das Schweißen oder Löten ist durch das Weiten dahingehend verbessert, dass die Erzeugung unbeabsichtigter Schweißbrücken bzw. Lötbrücken zu benachbarten Hairpinendpaaren besser vermieden ist. Das Crimpen ist dahingehend verbessert, dass mehr Platz für ein Crimpwerkzeug bereitgestellt ist.

Durch das Twistwerkzeug erfolgt im Anschluss das Twisten der Hairpinenden in die Umfangsrichtung des Statorgrundkörpers. Hierfür greift das Twistwerkzeug in die konkaven Endkonturen der Hairpinenden ein und übt eine Kraft in Umfangsrichtung auf die Hairpinenden aus. Das Twisten erfolgt vorzugsweise derart, dass direkt benachbarte Hairpinenden in entgegengesetzte Richtungen in Umfangsrichtung getwistet werden. Eine radiale Führung der Hairpinenden beim Twisten ist durch das Zusammenspiel des Twistwerkzeugs mit der konkaven Endkontur gewährleistet, sodass beim Twistwerkzeug auf zusätzliche radiale Stützvorrichtungen, die in radialer Richtung seitlich von den Hairpins angeordnet ist, verzichtet werden kann. Somit kann der Wickelkopf des Stators besonders platzsparend ausgebildet sein.

Ein erfindungsgemäßes Verfahren zur Herstellung eines Stators für eine Elektromaschine zum Antreiben eines Kraftfahrzeugs hat gegenüber herkömmlichen Verfahren den Vorteil, dass mit einfachen Mitteln sowie auf eine kostengünstige Art und Weise ein Stator herstellbar ist, der einen besonders kompakten Wickelkopf aufweist. Durch die konkaven Endkonturen ist beim Twisten eine direkte Krafteinleitung vom Twistwerkzeug auf die Hairpinenden erzielbar, sodass auf zusätzliche Anpress-, Führungs- und Formungsschritte verzichtet werden kann. Überdies sind somit keine zusätzlichen abstehenden Hairpinendbereiche, beispielsweise zur Herstellung einer Klemmung durch das Twistwerkzeug, erforderlich, die entweder zusätzlichen Bauraum beanspruchen oder durch Ablängen zu einem zusätzlichen Materialverbrauch führen.

Gemäß einer bevorzugten Weiterentwicklung der Erfindung kann bei einem Verfahren zur Herstellung eines Stators vorgesehen sein, dass Hairpins mit einem rechteckigen Querschnitt verwendet werden. Hierbei ist es bevorzugt, dass die Hairpinbreite, also eine Erstreckung des Hairpindrahts des Hairpins in Umfangsrichtung bzw. in Tangentialrichtung größer ist als eine Hairpindicke, also eine Erstreckung des Hairpindrahts in radialer Richtung. Durch den rechteckigen Querschnitt ist ein Verdrillen der Hairpins beim Twisten um eine Längsachse der Hairpins besser vermeidbar. Ferner weisen Hairpins mit einem rechteckigen Querschnitt platte Seitenflächen auf, die leichter mit anderen Seitenflächen benachbarter Hairpinenden zusammenführbar sind. Dies hat den Vorteil, dass mit einfachen Mitteln sowie auf eine kostengünstige Art und Weise die Herstellung des Stators weiter verbessert ist.

Es ist erfindungsgemäß bevorzugt, dass Hairpins verwendet werden, bei welchen die Hairpinendfläche einen rechteckigen Querschnitt, einen trapezförmigen Querschnitt, einen fünfeckigen Querschnitt oder einen rechteckigen Querschnitt mit einer konkaven Seite aufweist. Die konkave Endkontur erstreckt sich vorzugsweise auf einer Längsseite des Hairpins, die sich in Dickenrichtung des Hairpins sowie in Längsrichtung des Hairpins erstreckt. Bei einem rechteckigen Querschnitt ist die konkave Endkontur vorzugsweise als gleichmäßige Ausnehmung auf der Längsseite ausgebildet, wobei sich die konkave Endkontur um eine Achse erstreckt, die parallel zur Dickenrichtung des Hairpins ausgerichtet ist. Bei einem trapezförmigen Querschnitt ist die konkave Endkontur vorzugsweise als asymmetrische Ausnehmung auf der Längsseite ausgebildet, beispielsweise durch unterschiedliche Tiefen bezüglich der Längsseite ohne konkave Endkontur. Die konkave Endkontur erstreckt sich demnach um eine Achse, die schräg zur Dickenrichtung des Hairpins ausgerichtet ist. Bei einem fünfeckigen Querschnitt ist die konkave Endkontur vorzugsweise durch eine konkave Endkontur mir einer direkt angrenzenden Fase oder dergleichen gebildet. Bei einem rechteckigen Querschnitt mit einer konkaven Seite ist die konkave Endkontur vorzugsweise als symmetrische Ausnehmung auf der Längsseite ausgebildet, wobei sich die konkave Endkontur um eine Achse erstreckt, die parallel zur Längsrichtung des Hairpins ausgerichtet ist. Dies hat den Vorteil, dass mit einfachen Mitteln sowie auf eine kostengünstige Art und Weise die Herstellung des Stators weiter verbessert ist.

Weiter bevorzugt werden Hairpins verwendet, bei welchen zwei benachbarte Hairpinendseiten der Hairpins eine konkave Endkontur aufweisen, welche sich zur selben Hairpinendfläche erstrecken. Die Hairpinendfläche weist somit vorzugsweise einen fünfeckigen Querschnitt auf. Weiter bevorzugt weisen die zwei benachbarten konkaven Endkonturen eine gemeinsame Trennkante auf. Vorzugsweise sind die zwei benachbarten konkaven Endkonturen unterschiedlich breit ausgebildet. Dies hat den Vorteil, dass mit einfachen Mitteln sowie auf eine kostengünstige Art und Weise die Herstellung des Stators weiter verbessert ist.

In einer besonders bevorzugten Ausgestaltung der Erfindung kann bei einem Verfahren zur Herstellung eines Stators vorgesehen sein, dass Hairpins verwendet werden, die als U-Pins ausgebildet sind, wobei die konkaven Endkonturen der Hairpinenden einander zugewandt sind. Die U-Pins weisen zwei Schenkel auf, die durch einen um etwa 180° umgebogenen Zwischenbereich miteinander verbunden sind. Vorzugsweise sind die U-Pins monolithisch ausgebildet, sodass die beiden Schenkel und der Zwischenbereich beispielsweise durch einen Umformprozess aus einem I-Pin hergestellt sind. Die konkaven Endkonturen sind somit vollständig oder zumindest teilweise auf den Innenseiten der Schenkel angeordnet. Dies hat den Vorteil, dass mit einfachen Mitteln sowie auf eine kostengünstige Art und Weise die Herstellung des Stators weiter verbessert ist.

Vorzugsweise rollt das Twistwerkzeug beim Twisten auf der konkaven Endkontur ab. Hierfür kann das Twistwerkzeug beispielsweise einen Abrollabschnitt aufweisen, der vorzugsweise konvex ausgebildet ist. Der Abrollabschnitt weist vorzugsweise einen kleineren Radius als die konkave Endkontur auf. Durch ein Ausüben einer Druckkraft vom Twistwerkzeug auf den konkaven Endabschnitt in Umfangsrichtung bzw. Tangentialrichtung, ist der Hairpin derart umbiegbar, dass der Abrollabschnitt auf der konkaven Endkontur abrollt. Durch das Eingreifen des Abrollabschnitts in die konkave Endkontur ist zudem ein Wegbiegen des Hairpins in radialer Richtung formschlüssig verhindert. Dies hat den Vorteil, dass mit einfachen Mitteln sowie auf eine kostengünstige Art und Weise die Herstellung des Stators weiter verbessert ist.

Gemäß einer bevorzugten Ausführungsform der Erfindung werden die Hairpinenden nach dem Twisten paarweise in einer Verschweißlage miteinander elektrisch gekoppelt verbunden werden, wobei die Hairpinenden zum Verbinden vom Twistwerkzeug in der Verschweißlage gehalten werden. Unter einer Verschweißlage wird im Rahmen der Erfindung eine relative Lage der Hairpinenden verstanden, in welcher diese zum paarweise elektrisch gekoppelten Verbinden zum Bilden der Statorwicklung angeordnet sind. Unter einer Verschweißlage kann im Rahmen der Erfindung auch eine relative Lage der Hairpinenden verstanden werden, in welcher diese zum paarweise Verschweißen, Verlöten, Vercrimpen oder dergleichen zum Bilden der Statorwicklung angeordnet sind. Es kann erfindungsgemäß vorgesehen sein, dass sich die abisolierten Hairpinenden der Hairpins in der Verschweißlage paarweise kontaktieren. Das Halten der Hairpinenden in der Verschweißlage erfolgt vorzugsweise durch das Verbleiben des Twistwerkzeugs in einer Endlage, welche das Twistwerkzeug direkt am Ende des Twistprozesses, wenn kein weiteres Verbiegen der Hairpins erfolgt, einnimmt. Das Halten in der Verschweißlage erfolgt demnach vorzugsweise durch Bereitstellen eines Widerlagers durch das Twistwerkzeug durch Aufrechterhalten einer Druckkraft auf die konkave Endkontur. Weiter bevorzugt bewirkt die Druckkraft ein gegenseitiges Andrücken der miteinander zu verschweißenden Hairpinenden in radialer Richtung. Somit ist der nachfolgende Schweißprozess, Lötprozess, Crimpprozess oder dergleichen einfacher und zuverlässiger durchführbar. Dies hat den Vorteil, dass mit einfachen Mitteln sowie auf eine kostengünstige Art und Weise die Herstellung des Stators weiter verbessert ist.

Besonders bevorzugt wird mit dem Twistwerkzeug beim Twisten auf der konkaven Endkontur eine Druckkraftkomponente in Umfangsrichtung und eine Druckkraftkomponente in radiale Richtung auf die konkave Endkontur übertragen. Besonders bevorzugt ist die konkave Endkontur derart ausgebildet, dass das Übertragen dieser Druckkraftkomponenten begünstigt ist. Demnach ist die konkave Endkontur vorzugsweise derart ausgebildet, dass zumindest eine Flächennormale an einer Stelle der konkaven Endkontur, die beim Twisten mit dem Twistwerkzeug im Eingriff ist, eine Richtungskomponente in radialer Richtung und eine Richtungskomponente in Umfangsrichtung bzw. Tangentialrichtung aufweist. Hierdurch ist eine stabile Führung der Hairpinenden sichergestellt und das Risiko eines Abrutschens der Hairpinenden in radiale Richtung reduziert. Somit sind weitere Führungsvorrichtungen des Twistwerkzeugs zum Führen der Hairpinenden beim Twisten verzichtbar. Dies hat den Vorteil, dass mit einfachen Mitteln sowie auf eine kostengünstige Art und Weise die Herstellung des Stators weiter verbessert ist.

Gemäß einem zweiten Aspekt der Erfindung wird die Aufgabe durch eine Elektromaschine zum Antreiben eines Kraftfahrzeugs gelöst. Die Elektromaschine weist einen Stator mit einem Statorgrundkörper sowie einer Statorwicklung aus Hairpins und einen rotierbar zum Stator gelagerten Rotor auf. Erfindungsgemäß ist der Stator durch ein erfindungsgemäßes Verfahren zur Herstellung eines Stators für eine Elektromaschine zum Antreiben eines Kraftfahrzeugs hergestellt.

Demnach weist der Stator einen Statorgrundkörper mit einer Vielzahl von Statornuten auf. In den Statornuten sind mehrere Hairpins derart angeordnet, dass die Hairpins in radialer Richtung des Statorgrundkörpers in mehreren Hairpinlagen in den Statornuten angeordnet sind und die Hairpinenden der Hairpins in axialer Richtung des Statorgrundkörpers aus dem Statorgrundkörper herausragen. Auf mindestens einer Stirnseite des Statorgrundkörpers sind die Hairpinenden getwistet und paarweise miteinander verschweißt, verlötet, vercrimpt oder dergleichen. Auf der anderen Stirnseite des Statorgrundkörpers können die Hairpinenden ebenfalls getwistet und paarweise miteinander verschweißt, verlötet, vercrimpt oder dergleichen sein. Alternativ können auf einer Stirnseite des Statorgrundkörpers jeweils zwei Hairpins durch einen Zwischenbereich miteinander verbunden sein, der monolithisch mit den Hairpins ausgebildet ist. In beiden Fällen weist der Stator an beiden Statorstirnseiten jeweils einen Wickelkopf auf. Auf diese Weise ist eine mehrphasige Statorwicklung gebildet.

Die erfindungsgemäße Elektromaschine unterscheidet sich von herkömmlichen Elektromaschinen in der Ausbildung des Stators, insbesondere der Hairpins. Die Hairpinenden der Hairpins, die aus dem Statorgrundkörper herausragen und zur Bildung der mehrphasigen Statorwicklung jeweils paarweise miteinander elektrisch gekoppelt sowie verbunden sind, beispielsweise verschweißt, verlötet, vercrimpt oder dergleichen, weisen jeweils eine die Hairpins in Längsrichtung der Hairpins begrenzende Hairpinendfläche auf, wobei eine Hairpinendseite der Hairpins eine konkave Endkontur aufweist, welche sich zur Hairpinendfläche erstreckt. Durch diese Ausbildung der Hairpinenden ist die Herstellung des Stators wesentlich verbessert.

Bei der erfindungsgemäßen Elektromaschine zum Antreiben eines Kraftfahrzeugs ergeben sich sämtliche Vorteile, die bereits zu einem Verfahren zur Herstellung eines Stators für eine Elektromaschine zum Antreiben eines Kraftfahrzeugs gemäß dem ersten Aspekt der Erfindung beschrieben worden sind. Demnach hat die erfindungsgemäße Elektromaschine gegenüber herkömmlichen Elektromaschinen den Vorteil, dass mit einfachen Mitteln sowie auf eine kostengünstige Art und Weise ein Stator bereitgestellt ist, der einen besonders kompakten Wickelkopf aufweist. Durch die konkaven Endkonturen ist beim Twisten eine direkte Krafteinleitung vom Twistwerkzeug auf die Hairpinenden erzielt, sodass auf zusätzliche Anpress-, Führungs- und Formungsschritte verzichtet wurde. Überdies sind somit keine zusätzlichen abstehenden Hairpinendbereiche, beispielsweise zur Herstellung einer Klemmung durch das Twistwerkzeug, erforderlich, die entweder zusätzlichen Bauraum beanspruchen oder durch Ablängen zu einem zusätzlichen Materialverbrauch führen.

Gemäß einem dritten Aspekt der Erfindung wird die Aufgabe durch ein Kraftfahrzeug gelöst. Das Kraftfahrzeug weist aufweisend ein elektrisches Antriebssystem mit einer Traktionsbatterie auf. Erfindungsgemäß weist das elektrische Antriebssystem zum Antreiben des Kraftfahrzeugs eine erfindungsgemäße Elektromaschine auf.

Die Traktionsbatterie ist zum Bereitstellen elektrischer Energie zum Betreiben der Elektromaschine ausgebildet.

Bei dem erfindungsgemäßen Kraftfahrzeug ergeben sich sämtliche Vorteile, die bereits zu einem Verfahren zur Herstellung eines Stators für eine Elektromaschine zum Antreiben eines Kraftfahrzeugs gemäß dem ersten Aspekt der Erfindung sowie zu einer Elektromaschine zum Antreiben eines Kraftfahrzeugs gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein Stator bereitgestellt ist, der einen besonders kompakten Wickelkopf aufweist. Durch die konkaven Endkonturen ist beim Twisten eine direkte Krafteinleitung vom Twistwerkzeug auf die Hairpinenden erzielt, sodass auf zusätzliche Anpress-, Führungs- und Formungsschritte verzichtet wurde. Überdies sind somit keine zusätzlichen abstehenden Hairpinendbereiche, beispielsweise zur Herstellung einer Klemmung durch das Twistwerkzeug, erforderlich, die entweder zusätzlichen Bauraum beanspruchen oder durch Ablängen zu einem zusätzlichen Materialverbrauch führen.

Eine erfindungsgemäße Elektromaschine, ein erfindungsgemäßes Kraftfahrzeug sowie ein erfindungsgemäßes Verfahren werden nachfolgend anhand von Zeichnungen näher erläutert. Es zeigen jeweils schematisch:
- Figur 1: in einer perspektivischen Ansicht einen Stator für eine Elektromaschine gemäß einer bevorzugten ersten Ausführungsform der Erfindung,
- Figur 2: in einer perspektivischen Ansicht einen Hairpin der Elektromaschine aus Figur 1,
- Figur 3: in einer Seitenansicht einen Stator während eines ersten Zeitpunkts bei der Durchführung eines erfindungsgemäßen Verfahrens,
- Figur 4: in einer Seitenansicht einen Stator während eines zweiten Zeitpunkts bei der Durchführung eines erfindungsgemäßen Verfahrens,
- Figur 5: in einer Seitenansicht einen Stator während eines dritten Zeitpunkts bei der Durchführung eines erfindungsgemäßen Verfahrens,
- Figur 6: in einer perspektivischen Ansicht ein Hairpinende gemäß einer bevorzugten ersten Ausführungsform der Erfindung,
- Figur 7: in einer perspektivischen Ansicht ein Hairpinende gemäß einer bevorzugten zweiten Ausführungsform der Erfindung,
- Figur 8: in einer perspektivischen Ansicht ein Hairpinende gemäß einer bevorzugten dritten Ausführungsform der Erfindung,
- Figur 9: in einer perspektivischen Ansicht ein Hairpinende gemäß einer bevorzugten vierten Ausführungsform der Erfindung, und
- Figur 10: in einer Seitenansicht eine bevorzugte Ausführungsform eines erfindungsgemäßen Kraftfahrzeugs.

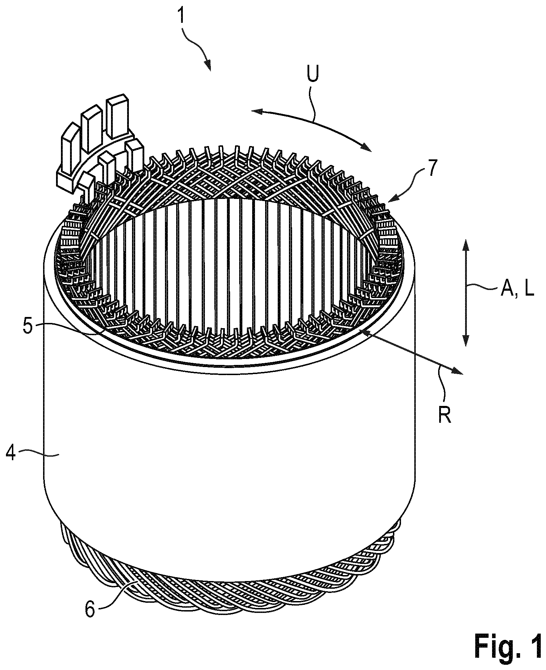

Elemente mit gleicher Funktion und Wirkungsweise sind in den Figuren 1 bis 10 jeweils mit denselben Bezugszeichen versehen.

In Fig. 1 ist ein Stator 1 für eine Elektromaschine 2 zum Antreiben eines Kraftfahrzeugs 3 gemäß einer bevorzugten ersten Ausführungsform der Erfindung schematisch in einer perspektivischen Ansicht dargestellt. Der Stator 1 weist einen Statorgrundkörper 4 auf, der eine Vielzahl von Statornuten 5 aufweist. Die Statornuten 5 weisen in radialer Richtung R eine Nuttiefe auf und erstrecken sich in axiale Richtung A durch den Statorgrundkörper 4. In den Statornuten 5 sind mehrere als U-Pins ausgebildete Hairpins 6 derart angeordnet, dass die Hairpins 6 in mehreren Hairpinlagen in den Statornuten 5 angeordnet sind und in axialer Richtung A beidseitig aus dem Statorgrundkörper 4 herausragen.

Die Hairpins 6 weisen Hairpinenden 7 auf, die in axialer Richtung A auf einer Seite aus dem Statorgrundkörper 4 herausragen. Die Hairpins 6 weisen eine elektrisch isolierende Beschichtung auf, wobei an Endbereichen der Hairpinenden 7 keine elektrisch isolierende Beschichtung angeordnet ist. Die Hairpinenden 7 sind in Umfangsrichtung U getwistet und paarweise miteinander verschweißt.

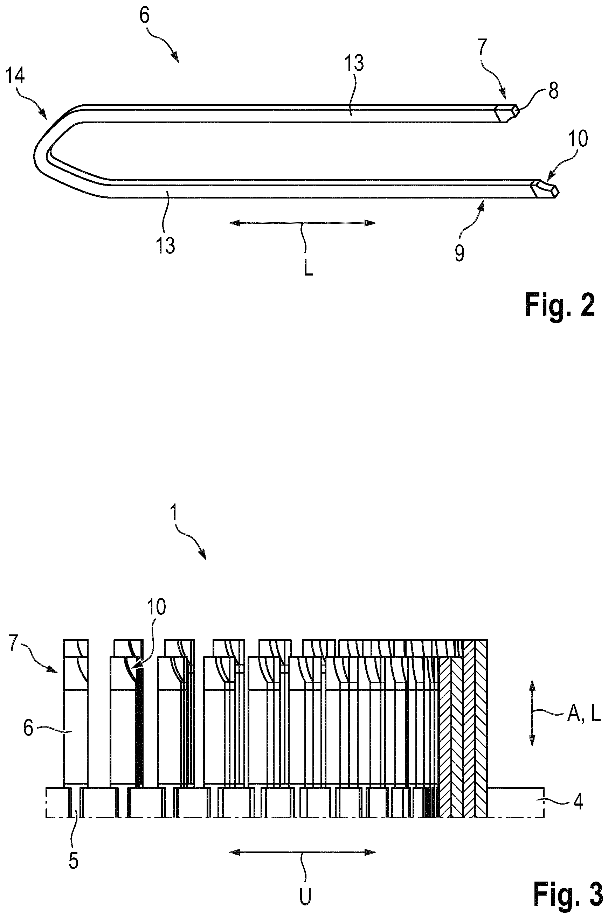

Fig. 2 zeigt einen Hairpin 6 der Elektromaschine 2 aus Fig. 1 schematisch in einer perspektivischen Darstellung. Der Hairpin 6 ist als U-Pin ausgebildet und weist zwei parallele, sich in Längsrichtung L erstreckende Schenkel 13 auf, die über einen um 180° gebogenen Zwischenbereich 14 miteinander verbunden sind. Die Schenkel 13 sind mit dem Zwischenbereich 14 monolithisch ausgebildet. Der Hairpin 6 weist einen rechteckigen Querschnitt auf. Zwei freie Hairpinenden 7 des Hairpins 6 sind durch jeweils eine Hairpinendfläche 8 begrenzt. An einander gegenüberliegenden Hairpinendseiten 9 ist jeweils eine konkave Endkontur 10 ausgebildet, die sich bis zur Hairpinendfläche 8 erstreckt.

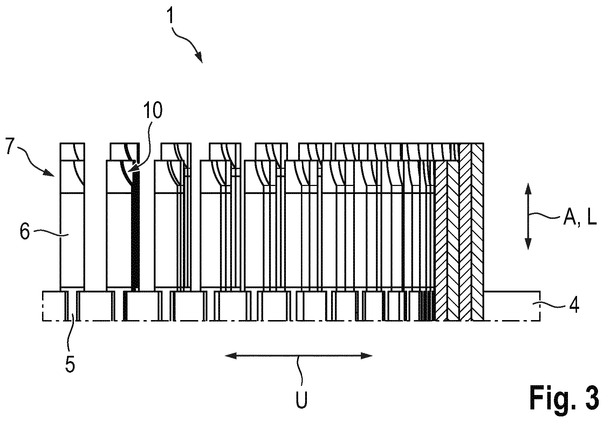

In Fig. 3 ist ein Stator 1 während eines ersten Zeitpunkts bei der Durchführung eines erfindungsgemäßen Verfahrens schematisch in einer Seitenansicht abgebildet. Zum ersten Zeitpunkt ist ein Statorgrundkörper 4 mit mehreren Statornuten 5 bereitgestellt, in welchen Hairpins 6 in mehreren Hairpinlagen angeordnet sind. Freie Hairpinenden 7 der Hairpins 6 ragen in axialer Richtung A aus dem Statorgrundkörper 4 heraus. An Endbereichen der Hairpinenden 7 ist jeweils eine konkave Endkontur 10 ausgebildet.

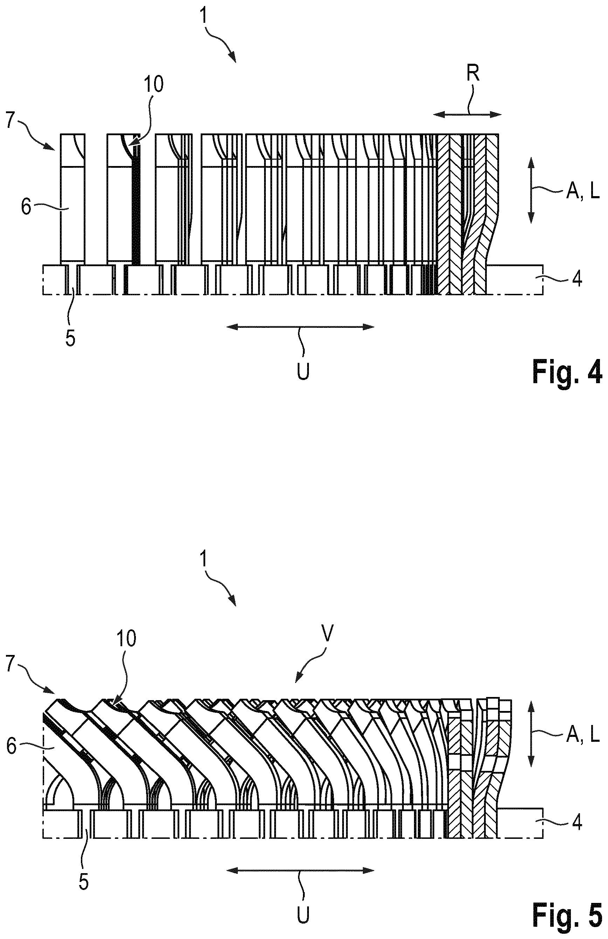

Fig. 4 zeigt den Stator 1 während eines zweiten Zeitpunkts bei der Durchführung eines erfindungsgemäßen Verfahrens schematisch in einer Seitenansicht. Zum zweiten Zeitpunkt sind die Hairpinenden 7 in radialer Richtung R geweitet. In Fig. 5 ist der Stator 1 während eines dritten Zeitpunkts bei der Durchführung eines erfindungsgemäßen Verfahrens schematisch in einer Seitenansicht abgebildet. Zum dritten Zeitpunkt sind die Hairpinenden 7 in Umfangsrichtung U getwistet und in einer Verschweißlage V zum paarweise Verschweißen angeordnet.

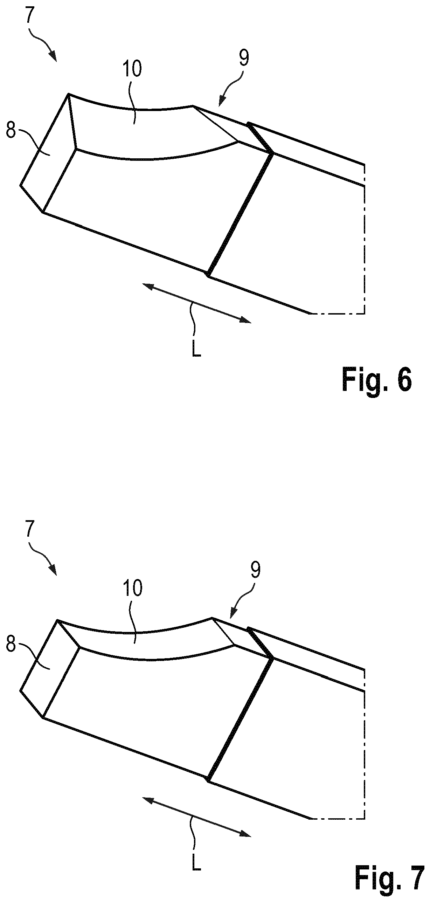

Fig. 6 zeigt ein Hairpinende 7 gemäß einer bevorzugten ersten Ausführungsform der Erfindung schematisch in einer perspektivischen Ansicht. Der Hairpin 6 (vgl. Fig. 2) weist einen rechteckigen Querschnitt auf. Das Hairpinende 7 ist durch eine Hairpinendfläche 8 in Längsrichtung L begrenzt. Auf zwei benachbarten Hairpinendseiten 9 ist eine konkave Endkontur 10 ausgebildet, die sich bis zur Hairpinendfläche 8 hin erstreckt. Die Hairpinendfläche 8 ist somit trapezförmig ausgebildet. Die konkave Endkontur 10 ist um eine Achse gekrümmt, die schräg zur Längsrichtung L ausgebildet ist.

In Fig. 7 ist ein Hairpinende 7 gemäß einer bevorzugten zweiten Ausführungsform der Erfindung schematisch in einer perspektivischen Ansicht. Der Hairpin 6 (vgl. Fig. 2) weist einen rechteckigen Querschnitt auf. Das Hairpinende 7 ist durch eine Hairpinendfläche 8 in Längsrichtung L begrenzt. Auf einer Hairpinendseite 9 ist eine konkave Endkontur 10 ausgebildet, die sich bis zur Hairpinendfläche 8 hin erstreckt. Die Hairpinendfläche 8 ist somit rechteckig ausgebildet. Die konkave Endkontur 10 ist um eine Achse gekrümmt, die senkrecht zur Längsrichtung L ausgebildet ist.

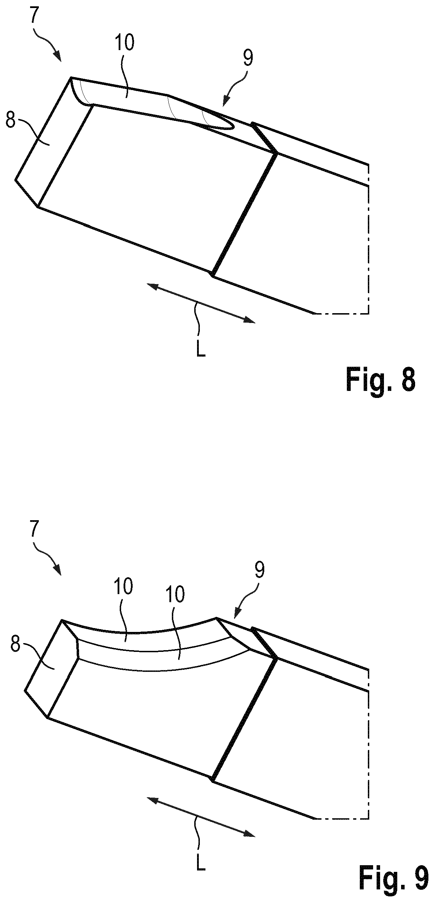

Fig. 8 zeigt ein Hairpinende 7 gemäß einer bevorzugten dritten Ausführungsform der Erfindung schematisch in einer perspektivischen Ansicht. Der Hairpin 6 (vgl. Fig. 2) weist einen rechteckigen Querschnitt auf. Das Hairpinende 7 ist durch eine Hairpinendfläche 8 in Längsrichtung L begrenzt. Auf einer Hairpinendseite 9 ist eine konkave Endkontur 10 ausgebildet, die sich bis zur Hairpinendfläche 8 hin erstreckt und in Längsrichtung L von der Hairpinendfläche 8 weg eine abnehmende Tiefe aufweist. Die Hairpinendfläche 8 ist somit rechteckig mit einer konkaven Seite ausgebildet. Die konkave Endkontur 10 ist um eine Achse gekrümmt, die etwa parallel zur Längsrichtung L ausgebildet ist.

In Fig. 9 ist ein Hairpinende 7 gemäß einer bevorzugten vierten Ausführungsform der Erfindung schematisch in einer perspektivischen Ansicht. Der Hairpin 6 (vgl. Fig. 2) weist einen rechteckigen Querschnitt auf. Das Hairpinende 7 ist durch eine Hairpinendfläche 8 in Längsrichtung L begrenzt. Auf zwei benachbarten Hairpinendseiten 9 ist jeweils eine konkave Endkontur 10 ausgebildet, die sich bis zur Hairpinendfläche 8 hin erstrecken und eine gemeinsame Seitenkante aufweisen. Die konkaven Endkonturen 10 weisen unterschiedliche Breiten auf. Die Hairpinendfläche 8 ist somit fünfeckig ausgebildet. Eine der konkaven Endkonturen 10 ist um eine Achse gekrümmt, die senkrecht zur Längsrichtung L ausgebildet ist. Die andere der konkaven Endkonturen 10 ist um eine Achse gekrümmt, die schräg zur Längsrichtung L ausgebildet ist.

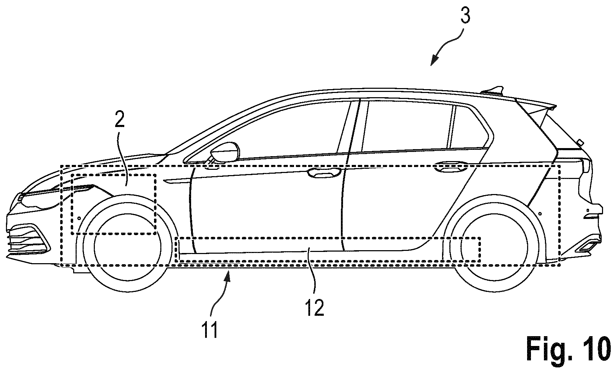

Fig. 10 zeigt eine bevorzugte Ausführungsform eines erfindungsgemäßen Kraftfahrzeugs 3 schematisch in einer Seitenansicht. Das Kraftfahrzeug 3 weist ein elektrisches Antriebssystem 11 mit einer erfindungsgemäßen Elektromaschine 2 zum Antreiben des Kraftfahrzeugs 3 und einer Traktionsbatterie 12 zum Bereitstellen elektrischer Energie zum Betreiben der Elektromaschine 2 auf.

### Bezugszeichenliste

- 1: Stator
- 2: Elektromaschine
- 3: Kraftfahrzeug
- 4: Statorgrundkörper
- 5: Statornut
- 6: Hairpin
- 7: Hairpinende
- 8: Hairpinendfläche
- 9: Hairpinendseite
- 10: konkave Endkontur
- 11: elektrisches Antriebssystem
- 12: Traktionsbatterie
- 13: Schenkel
- 14: Zwischenbereich

- A: axiale Richtung
- L: Längsrichtung
- R: radiale Richtung
- U: Umfangsrichtung
- V: Verschweißlage

## Patentansprüche

1. Verfahren zur Herstellung eines Stators (1) für eine Elektromaschine (2) zum Antreiben eines Kraftfahrzeugs (3), aufweisend:
- Bereitstellen eines Statorgrundkörpers (4) mit einer Vielzahl von Statornuten (5),
- Anordnen von Hairpins (6) in den Statornuten (5) derart, dass die Hairpins (6) in radialer Richtung (R) des Statorgrundkörpers (4) in mehreren Hairpinlagen in den Statornuten (5) angeordnet sind und Hairpinenden (7) der Hairpins (6) in axialer Richtung (A) des Statorgrundkörpers (4) aus dem Statorgrundkörper (4) herausragen, wobei die Hairpinenden (7) jeweils eine die Hairpins (6) in Längsrichtung (L) der Hairpins (6) begrenzende Hairpinendfläche (8) aufweisen, wobei eine Hairpinendseite (9) der Hairpins (6) eine konkave Endkontur (10) aufweist, welche sich zur Hairpinendfläche (8) hin erstreckt, und
- Twisten der Hairpinenden (7) in eine Umfangsrichtung (U) des Statorgrundkörpers (4) durch Eingreifen eines Twistwerkzeugs in die konkaven Endkonturen (10) und Ausüben einer Twistkraft auf die Hairpinenden (7) durch das Twistwerkzeug in Umfangsrichtung (U).

2. Verfahren nach Anspruch 1,
**dadurch gekennzeichnet,**
**dass** Hairpins (6) mit einem rechteckigen Querschnitt verwendet werden.

3. Verfahren nach Anspruch 2,
**dadurch gekennzeichnet,**
**dass** Hairpins (6) verwendet werden, bei welchen die Hairpinendfläche (8) einen rechteckigen Querschnitt, einen trapezförmigen Querschnitt, einen fünfeckigen Querschnitt oder einen rechteckigen Querschnitt mit einer konkaven Seite aufweist.

4. Verfahren nach einem der vorangegangenen Ansprüche,
**dadurch gekennzeichnet,**
**dass** Hairpins (6) verwendet werden, bei welchen zwei benachbarte Hairpinendseiten (9) der Hairpins (6) eine konkave Endkontur (10) aufweisen, welche sich zur selben Hairpinendfläche (8) erstrecken.

5. Verfahren nach einem der vorangegangenen Ansprüche,
**dadurch gekennzeichnet,**
**dass** Hairpins (6) verwendet werden, die als U-Pins ausgebildet sind, wobei die konkaven Endkonturen (10) der Hairpinenden (7) einander zugewandt sind.

6. Verfahren nach einem der vorangegangenen Ansprüche,
**dadurch gekennzeichnet,**
**dass** das Twistwerkzeug beim Twisten auf der konkaven Endkontur (10) abrollt.

7. Verfahren nach einem der vorangegangenen Ansprüche,
**dadurch gekennzeichnet,**
**dass** die Hairpinenden (7) nach dem Twisten paarweise in einer Verschweißlage (V) miteinander elektrisch gekoppelt verbunden werden, wobei die Hairpinenden (7) zum Verbinden vom Twistwerkzeug in der Verschweißlage (V) gehalten werden.

8. Verfahren nach einem der vorangegangenen Ansprüche,
**dadurch gekennzeichnet,**
**dass** mit dem Twistwerkzeug beim Twisten auf der konkaven Endkontur (10) eine Druckkraftkomponente in Umfangsrichtung (U) und eine Druckkraftkomponente in radialer Richtung (R) auf die konkave Endkontur (10) übertragen wird.

9. Elektromaschine (2) zum Antreiben eines Kraftfahrzeugs (3), aufweisend einen Stator (1) mit einem Statorgrundkörper (4) sowie einer Statorwicklung aus Hairpins (6) und einen rotierbar zum Stator (1) gelagerten Rotor,
**dadurch gekennzeichnet,**
**dass** der Stator (1) durch ein Verfahren nach einem der vorangegangenen Ansprüche hergestellt ist.

10. Kraftfahrzeug (3), aufweisend ein elektrisches Antriebssystem (11) mit einer Traktionsbatterie (12),
**dadurch gekennzeichnet,**
**dass** das elektrische Antriebssystem (11) zum Antreiben des Kraftfahrzeugs (3) eine Elektromaschine (2) nach Anspruch 9 aufweist.
